# EUROPEAN PATENT SPECIFICATION

(11) **EP 0 828 152 B1**
(45) Date of publication and mention of the grant of the patent: **12.06.2002**
(21) Application number: 97115366.3
(22) Date of filing: 04.09.1997
(51) Int. Cl.: G01M 13/04

(54) **Canned-motor bearing abrasion monitor**
Verschleissüberwachung eines Spaltrohrmotorlagerung
Surveillance de l'abrasion d'un palier d'un moteur à manchon d'entrefer

(30) Priority: 06.09.1996 JP 23648396
(43) Date of publication of application: 11.03.1998
(73) Proprietor: NIKKISO CO., LTD., Shibuya-ku Tokyo 150-91 (JP)
(72) Inventor: Eguchi, Masaaki, Higashi-Murayama Plant, Higashi-Murayama-shi, Tokyo (JP)
(74) Representative: Klunker . Schmitt-Nilson . Hirsch

(56) References cited:
- GB-A- 1 462 760
- US-A- 2 939 074
- US-A- 4 334 189

## Description

### BACKGROUND OF THE INVENTION

### 1. Field of the Invention

The present invention relates to a canned-motor bearing abrasion monitor for monitoring bearing abrasion according to displacement of a rotor due to abrasion of a bearing in a canned-motor, in accordance with the preamble of claim 1, 5 and 9.

### 2. Description of the Related Art

A canned motor is applied to a component of a plant as a motor for a pump and a high reliability is required for the motor. Therefore, a monitor for monitoring the abrasion of a bearing for supporting the rotor of the canned-motor from the outside is indispensable.

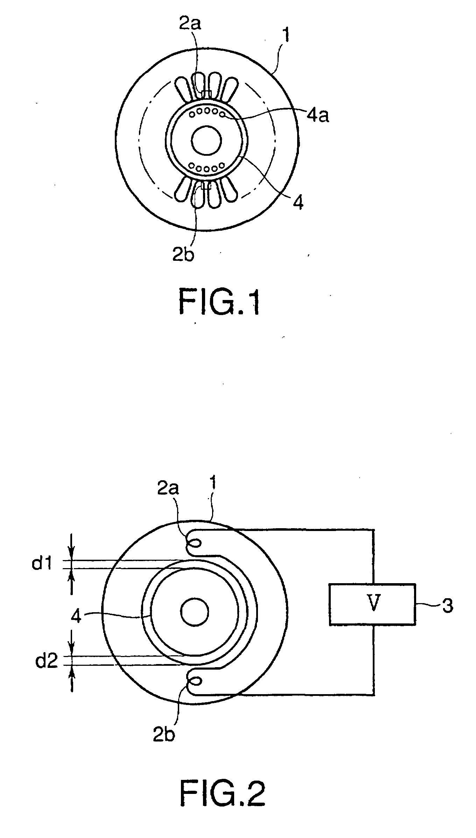

FIGs.1 and 2 show a conventional bearing abrasion monitor. Monitoring of the bearing abrasion is performed by mounting detection coils 2a and 2b at the entire circumference in each iron-core tooth portion of a stator 1 in its longitudinal direction at positions where the tooth portions are faced at 180° connecting the detection coils 2a and 2b so that the outputs of the coils 2a and 2b become differential, and reading a differential output by a voltmeter 3.

In this case, the voltage induced in the detection coils 2a and 2b due to rotation of a rotor 4 is a voltage in which a higher harmonic voltage due to a rotor groove 4a is superimposed on a basic-waveform voltage synchronizing with a power-supply frequency.
However, because the outputs of the detection coils 2a and 2b set at an interval of 180° , at just opposite positions, become differential, the difference between instantaneous values of the higher harmonic voltage is indicated on the voltmeter 3 as a detected voltage but the basic-waveform voltage is erased.

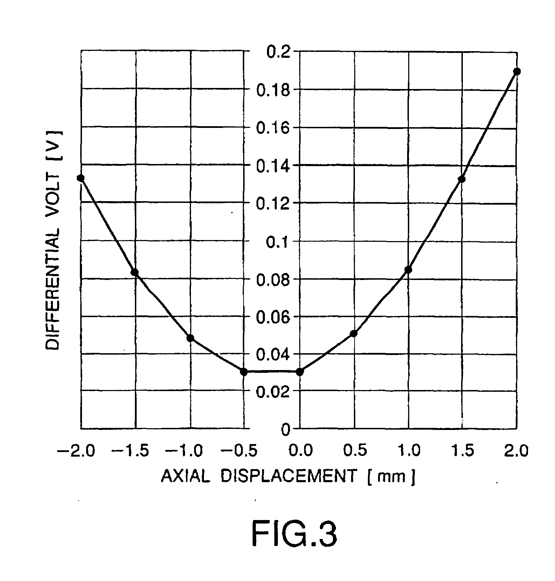

Moreover, in the case of the higher harmonic voltage, as shown in FIG.3, when a gap d1 between the stator 1 and the rotor 4 increases and a gap d2 decreases due to abrasion of the bearing (the rotor 4 is displaced in its radius direction), a differential output in which the higher harmonic voltage of the detection coil 2b increases is indicated on the voltmeter 3. FIG.3 shows an example of a characteristic diagram between axial displacement [mm] of the rotor 4 and a differential output [volt] of the detection coils 2a and 2b.

The above conventional bearing abrasion monitor can monitor only a radial abrasion state of a bearing causing the rotor 4 to be displaced in its radial direction but the monitor has a problem that it cannot monitor bearing abrasion states in other directions.

In the case of a canned-motor pump, the directions of a load applied to a rotor shaft are changed due to the property or pressure of transport fluid and the abrasion directions of a bearing are also changed. Therefore, detection of bearing abrasion with no directivity is strongly required.

In accordance with the pre-characterizing part of each of claims 1, 5 and 9, GB-A-1 462 760 discloses a canned-motor bearing abrasion monitor comprises a pair of detector coils, which are separated from each other by an angular distance corresponding to the angular distance between the poles of the machine. The coils are electrically connected in series with each other so that a fundamental wave will be cancelled.

US-A-2 939 074 discloses a device for testing a canned-motor bearing in which the starter of the motor includes additional conductors disposed in opposed spaced relation. During normal operation of the machine, i.e. when the rotor rotates, the signals from said additional conductors are compared so as to detect an eccentricity of the rotor.

US-A-4 334 189 discloses a monitoring apparatus of a canned motor comprising a plurality of coils disposed in the starter of the motor so as to detect normal operation of the motor by means of a combined value of higher harmonic waves.

### SUMMARY OF THE INVENTION

The present invention is made to solve the above problems and its object is to provide a canned-motor bearing abrasion monitor making it possible to monitor the abrasion of a bearing whose rotor is displaced in the radial direction, axial direction, and slant state (abrasion of a one-sided bearing in its radial direction).

The present invention achieves the above object in accordance with the features of each of claims 1, 5 and 9.

The dependent claims define preferred embodiments of the invention.

In the case of the invention of Claim 1, a displacement of a rotor from a normal rotational position in its radial direction or slant state detects the abrasion of a bearing in its radial direction or the abrasion of a one-sided bearing in its radial direction because an induced differential voltage due to intersection with the magnetic flux of the iron-core tooth portion of each detection coil or the highest voltage of the-induced differential voltages due to rectifiers is monitored by an output indicator.

In the case of the invention of Claim 5, a displacement of a rotor in its radial direction or slant state detects the abrasion of a bearing in its axial direction because the total voltage of the induced differential voltages of detection coils is monitored by an output indicator. In the case of the invention of Claim 9, a radial or slant displacement of a rotor and an axial displacement of the rotor are monitored by an output indicator to detect radial, one-side radial, and axial abrasion states of a bearing.

The nature, principle and utility of the invention will become more apparent from the following detailed description when read in conjunction with the accompanying drawings and diagrams.

### BRIEF DESCRIPTION OF THE DRAWINGS

In the accompanying drawings:
FIG.1 is a partial illustration showing a conventional state of setting detection coils to a stator for detecting bearing abrasion;
FIG.2 is a schematic to show a detection circuit connected with the coils;
FIG.3 is a characteristic diagram between axial displacement of a rotor and a differential output of detection coils;
FIG.4 is a perspective view to partially show an aspect for mounting a detection coil at the iron-core tooth portion of a stator;
FIG.5 is an illustration to show detection coils to be mounted at the both ends of a stator in its longitudinal direction in accordance with plural detection modes;
FIG.6 is an illustration to show a coil arrangement to detect the radial displacement of the rotor;
FIG.7 is an illustration to show a coil arrangement to detect the axial displacement of the rotor;
FIG.8 is an illustration showing a detection circuit for detecting radial and slant displacements of a rotor;
FIG.9 shows an example of voltage waveforms of detection coils when a rotor is displaced in its radial direction;
FIG.10 is a characteristic diagram between radial displacement of a rotor and a differential output of detection coils;
FIG.11 is an illustration showing a detection circuit for detecting an axial displacement of a rotor;
FIG.12 shows an example of voltage waveforms of detection coils when a rotor is displaced in its axial direction; and
FIG.13 is an illustration showing a detection circuit for detecting the radial displacement, slant displacement, and axial displacement of a rotor.

### DESCRIPTION OF THE PREFERRED EMBODIMENTS

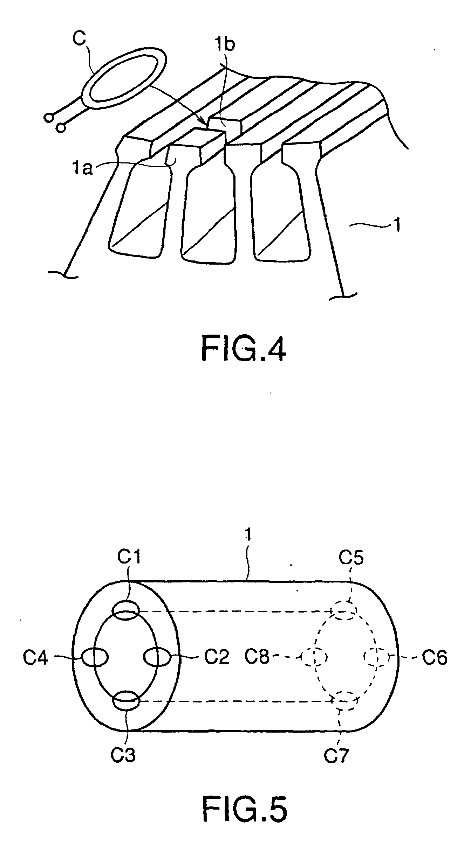

First, a method of mounting detection coils at the both ends of iron-core tooth portions of a stator faced with a rotor through a gap is described below by referring to FIG.4.

A notched groove 1b is formed at a part of the both ends (only one end is shown in FIG.4) of an iron-core tooth portion 1a of a stator 1 in its longitudinal direction and a detection coil C is fitted and secured (e.g. by resin) between the notched groove 1b and the end face of the iron-core tooth portion by turning the terminal of the coil C outward.

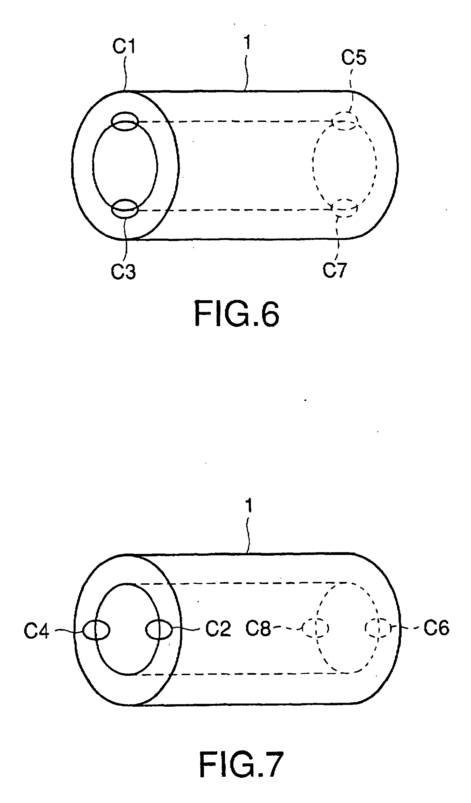

In the case of FIG.5, to mount the detection coils as described above, detection coils C1 and C3 and detection coils C5 and C7 faced each other at an interval of 180° respectively are provided for the both ends of the iron-core tooth portion 1a of the stator 1 in its longitudinal direction to detect a radial displacement of a rotor, detection coils C2 and C4 and detection coils C6 and C8 faced each other at an interval of 180° respectively are provided for the both ends of the iron-core tooth portion 1a in its longitudinal direction to detect an axial displacement of the rotor, and the detection coils C1 to C8 are provided to detect the radial, slant and axial displacements of the rotor. Namely, the detection coils C1 to C8 are provided to detect the radial, slant and axial displacements of the rotor as shown in FIG.5, the detection coils C1, C3 and C5, C7 are provided to detect the radial displacement of the rotor as shown in FIG.6 and the detection coils C2, C4 and C6, C8 are provided to detect the axial displacement of the rotor as shown in FIG.7

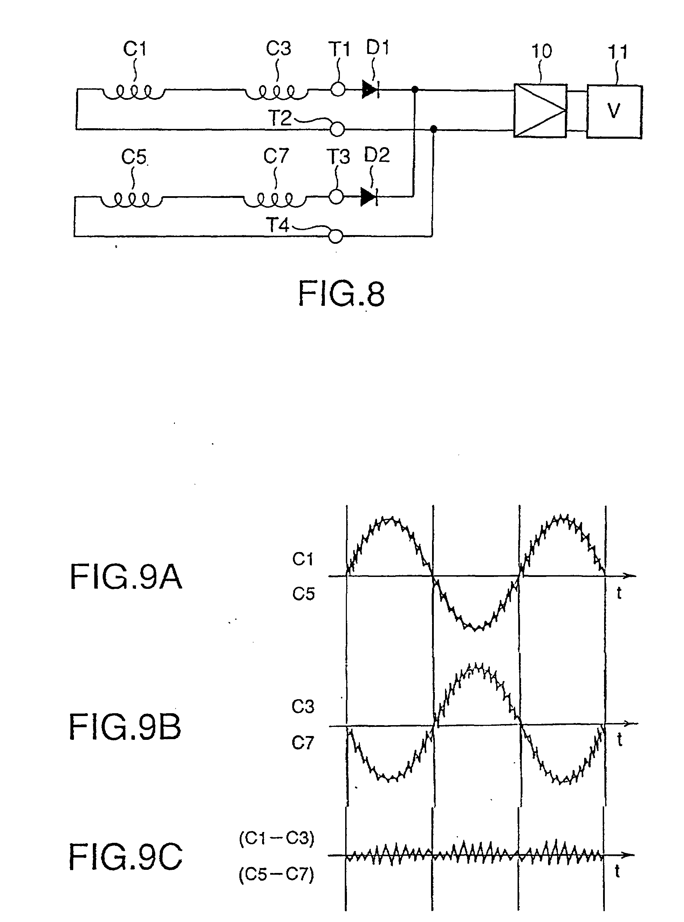

To detect the radial displacement of the rotor as shown in FIGs.6 and 8, the detection coils C1 and C3 are mounted at the both ends of the iron-core tooth portion 1a of the stator 1 in its longitudinal direction at an induction motor side, and output terminals T1 and T2 connected so that their outputs become differential, the detection coils C5 an C7, and output terminals T3 and T4 connected so that their outputs become differential are used.

Moreover, the differential connection circuits of the detection coils C1 and C3 and the detection coils C5 and C7 are connected in parallel through diodes D1 and D2 as rectifiers and an output indicator 11 (e.g. voltmeter) is connected through an amplifier 10.

Therefore, the differential output connection circuits of the detection coils C1 and C3 and the detection coils C5 and C7 erase a basic wave similarly to the description in the above prior art and output the difference between instantaneous values of a higher harmonic voltage to the output indicator 11 through the amplifier 10. Thus, a radial displacement of the rotor due to a radial abrasion of a bearing is detected or monitored. Moreover, the rectifiers such as the diodes D1 and D2 at the detection side make it possible to perform the detection corresponding to the slant displacement of the rotor due to a radial abrasion of one bearing by displaying the largest one of the differential outputs of the detection coils C5 and C7 on the output indicator 11.

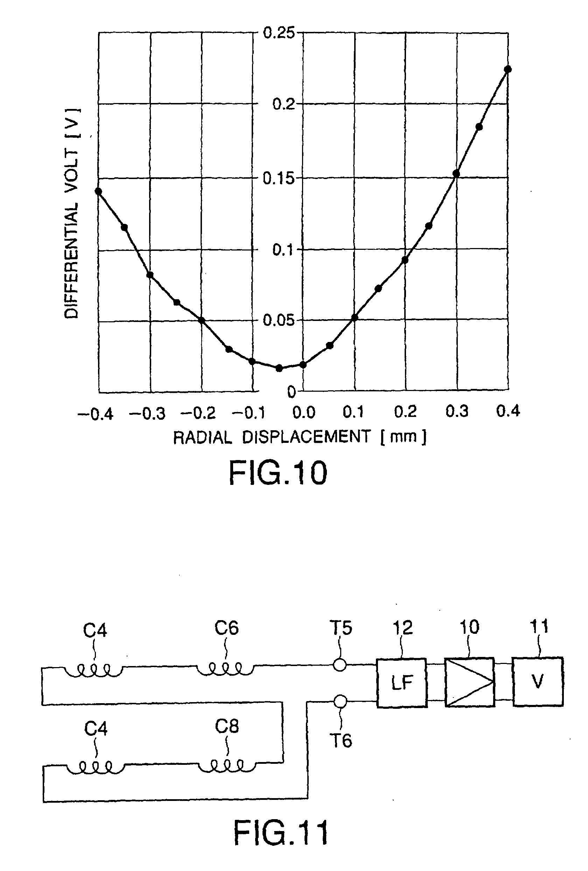

FIG.9 shows an example of induced voltage waveforms of the detection coils C1 to C8 when the rotor is displaced toward the detection coils C1 and C5, in which FIG.9(A) shows the voltage waveform of the detection coils C1 and C5, FIG.9(B) shows the voltage waveform of the detection coils C3 and C7, and FIG.9(C) shows a synthesis (differential output (C1-C3), (C5-C7)) waveform between the detection coils C1 and C3 and the detection coils C5 nd C7. In this case, a basic waveform (power supply frequency) is erased and a ripple component is outputted to detect the radial abrasion of the bearing. In FIG.8, when there is a difference between the differential output waveform of the detection coils C1 and C5 and the differential output of the detection coils C3 and C7, the output waveform of FIG.9(C) is outputted as a larger output through the diode D1 or D2 to detect a one-side radial abrasion of the bearing. FIG.10 shows an example of a characteristic diagram between radial displacement [mm] of the rotor 4 and a differential output [volt] of the detection coils C1, C3 and C5, C7.

To detect an axial displacement of the rotor 4, as shown in FIGs.7 and 11, output terminals T5 and T6 are used which are provided with a circuit constituted by connecting the detection coils C2 and C6 mounted at the both ends of the iron-core tooth portion 1a of the stator 1 in its longitudinal direction at the induction motor side so that the outputs of the coils C2 and C6 become differential as described above and a circuit constituted by connecting the detection coils C4 and C8 so that their outputs become differential in series. Moreover, the output indicator 11 is connected to the output terminals T5 and T6 through a low-pass filter 12 and the amplifier 10 at the detection side.

Therefore, when the rotor 4 is displaced in its axial direction from an axial abrasion load of the bearing, the sum of the differential outputs of the detection coils C2 and C6 and the detection coils C4 and C8 is displayed on the output indicator 11 through the low-pass filter 12 and the amplifier 10. In this case, higher harmonic wave (ripple) is removed by the low-pass filter 12 and thereby, the sensitivity is improved.

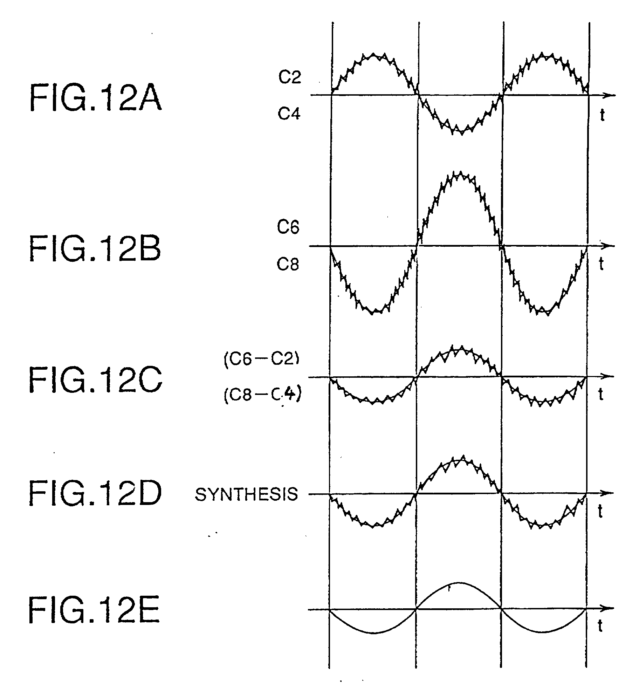

FIG.12 shows an example of induced voltage waveforms of detection coils C2, C4 and C6, C8 when the rotor 4 is displaced in its axial direction (displaced toward the detection coils C6 and C8), in which FIG.12(A) shows the voltage waveform of the detection coils C2 and C4, FIG.12(B) shows the voltage waveform of the detection coils C6 and C8, FIG.12(C) shows the differential output waveform between the detection coils C2 and C6 on one hand and the detection coils C4 and C8 on the other, FIG.10(D) shows the synthesis (total) waveform of the differential outputs, and FIG.10(E) shows a waveform from which ripples are removed by the low-pass filter 12. The axial abrasion of a bearing is detected by the output of the synthesis waveform in FIG.10(D) or 10(E).

In this case, if load fluctuation or voltage change occurs, the basic waveform (power supply frequency) of the above waveforms increases or decreases. However, the influence of basic waveform change can be decreased by a setoff because the differential output of the detection coils is used. The same is true for the above radial displacement because differential output is also used. FIG.3 shows an example of a characteristic diagram between axial displacement [mm] of the rotor 4 and a differential output [volt] of the detection coils C2, C4 and C6, C8.

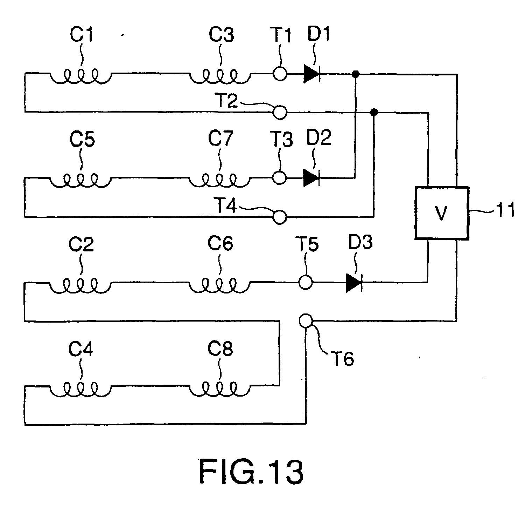

To detect radial, slant, and axial displacements of the rotor 4, as shown in FIGs.5 and 13, four pairs of the detection coils (C1, C3):(C2, C4) and (C5, C7) :(C6, C8) facing each other at an interval of 180° are mounted at the both ends of the iron-core tooth portion 1a of the stator 1 in its longitudinal direction as the induction motor side as described above and the output indicator 11 is connected to the differential output parallel circuit of the detection coils C1, C3 and C5, C7 for detecting a radial displacement shown in FIG.8 and a circuit constituted by connecting a diode D3 as a rectifier to the differential output series circuit of the detection coils C2, C4 and C6, C8 for detecting an axial displacement shown in FIG.11. Because the radial and axial displacements of the rotor 4 are detected by the detection coils C1 to C8 separate from each other, they are detected at a small interference.

The detection coil C(C1 to C8) fitted between the notched groove 1b formed on a part of the stator iron-core tooth portion 1a and the tooth end face of the portion can be fixed by an electrically insulating adhesive in addition to a resin. Moreover, though the amplifier 10 is not always necessary or the low-pass filter 12 is not an indispensable part, it may be used to improve the detection sensitivity.

The present invention can detect a radial abrasion of a bearing and a radial abrasion of a one-side bearing both of which cause radial and slant displacements of a rotor, and detect an axial abrasion of a bearing which causes an axial abrasion of a rotor. Further, the present invention can accurately detect radial and axial abrasions of a bearing which cause radial, slant, and axial abrasions of a rotor at a small mutual interference (according to detection by an individual detection coil).

It should be understood that many modifications and adaptations of the invention will become apparent to those skilled in the art and it is intended to encompass such obvious modifications and changes in the scope of the claims appended hereto.

## Claims

1. A canned-motor bearing abrasion monitor in which detection coils are provided at iron-core tooth portions (1a) of a stator to detect abrasion of a bearing,
**characterized in that**,
there is provided a detection circuit constituted by mounting two pairs of detection coils (C1, C3 and C5, C7), the coils being arranged such that the detection coils of each pair (C1, C3 and C5, C7) face each other at an interval of 180° and one pair of detection coils is located at each end of the iron-core tooth portions (1a), in such a way that the coils of each pair face each other in the longitudinal direction of the iron-core tooth portions (1a), differential output connection circuits of the pairs of detection coils facing each other at each end being connected in parallel.

2. The canned-motor bearing abrasion monitor according to Claim 1, wherein said detection circuit includes a voltmeter (11).

3. The canned-motor bearing abrasion monitor according to Claim 2, wherein said voltmeter (11) is connected to said differential output connection circuits through rectifiers (D1, D2) and an amplifier (10).

4. The canned-motor bearing abrasion monitor according to any of Claims 1-3, wherein notched grooves (1b) are formed at a part of each end of the iron-core tooth portions (1a) in their longitudinal direction and said two pairs of detection coils (C1, C3 and C5, C7) are respectively fitted and secured between the notched grooves (1b) and end faces of the iron-core tooth portions (1a) by turning terminals of said detection coils outward.

5. A canned-motor bearing abrasion monitor in which detection coils are provided at iron-core tooth portions (1 a) of a stator to detect abrasion of a bearing,
**characterized in that**,
there is provided a detection circuit constituted by mounting two pairs of detection coils (C2, C4 and C6, C8), the coils being arranged such that the detection coils of each pair (C2, C4 and C6, C8) face each other at an interval of 180° and one pair of detection coils is located at each end of the iron-core tooth portions (1a), in such a way that the coils of each pair face each other in the longitudinal direction of the iron-core tooth portions (1a), differential output connection circuits of the pairs of detection coils facing each other at each end being connected in series.

6. The canned-motor bearing abrasion monitor according to Claim 5, wherein said detection circuit includes a voltmeter (11).

7. The canned-motor bearing abrasion monitor according to Claim 6, wherein said voltmeter (11) is connected to said differential output connection circuits through a low-pass filter (12) and an amplifier (10).

8. The canned-motor bearing abrasion monitor according to any of Claims 5-7, notched grooves (1b) are formed at a part of each end of the iron-core tooth portions (1a) in its longitudinal direction and said two pairs of detection coils (C2, C4 and C6, C8) are respectively fitted and secured between the notched grooves (1b) and end faces of the iron-core tooth portions (1a) by turning terminals of said detection coils outward.

9. A canned-motor bearing abrasion monitor in which detection coils are provided at iron-core tooth portions (1a) of a stator to detect abrasion of a bearing,
**characterized in that**,
there is provided a detection circuit constituted by mounting four pairs of detection coils (C1, C3; C5, C7; C2, C6; C4, C8), the coils being arranged such that the detection coils of each pair of coils (C1, C3 and C5, C7; C2, C6 and C4, C8) face each other at an interval of 180° and two pairs of detection coils are located at each end of the iron-core tooth portions (1a), in such a way that the coils of each pair face each other in the longitudinal direction of the iron-core tooth portions, the differential output connection circuit of a first two pairs of detection coils (C1, C3 and C5, C7) facing each other being connected in parallel through two rectifiers (D1, D2) to form a parallel circuit, the differential output connection circuit of a second two pairs of detection coils (C2, C6 and C4, C8) facing each other being connected in series through a rectifier (D3) to form a series circuit, and a detection circuit being provided by connecting said parallel circuit and said series circuit through an output indicator (11).

10. A canned-motor bearing abrasion monitor according to Claim 9, wherein notched grooves (1b) are formed at a part of each end of the iron-core tooth portions (1a) in its longitudinal direction and said four pairs of detection coils (C1 to C8) are respectively fitted and secured between the notched grooves (1b) and the end faces of the iron-core tooth portions (1a) by turning terminals of said detection coils outward.

## Patentansprüche

1. Verschleißüberwachung für ein Motorlager eines Spaltrohr-Motors, wobei Detektorspulen an Eisenkern-Zahnabschnitten (1a) eines Stators vorgesehen sind, um einen Lagerverschleiß zu erkennen,
**dadurch gekennzeichnet, daß**
eine Detektorschaltung vorgesehen ist, gebildet durch Anordnen von zwei Paaren von Detektorspulen (C1, C3 und C5, C7), wobei die Spulen derart angeordnet sind, daß die Detektorspulen jedes Paares (C1, C3 und C5, C7) einander mit einem Intervallabstand von 180° gegenüberstehen und ein Paar Detektorspulen sich an jedem Ende der Eisenkern-Zahnabschnitte (1a) derart befindet, daß die Spulen jedes Paares einander in Längsrichtung der Eisenkern-Zahnabschnitte (1a) gegenüberstehen und Differenz-Ausgangssignal-Anschlußschaltungen der paarweisen Detektorspulen, die einander an jedem Ende gegenüberstehen, parallel geschaltet sind.

2. Verschleißüberwachung nach Anspruch 1, bei der die Detektorschaltung ein Voltmeter (11) enthält.

3. Verschleißüberwachung nach Anspruch 2, bei der das Voltmeter (11) an die Differenz-Ausgangssignal-Anschlußschaltungen über Gleichrichter (D1, D2) und einen Verstärker (10) angeschlossen ist.

4. Verschleißüberwachung nach einem der Ansprüche 1 bis 3, bei der kerbförmige Nuten (1b) in einem Teil jedes Endes der Eisenkem-Zahnabschnitte (1a) in deren Längsrichtung ausgeformt sind, und die beiden Paare von Detektorspulen (C1, C3 und C5, C7) zwischen die gekerbten Nuten (1b) und Stirnflächen der Eisenkern-Zahnabschnitte (1a) dadurch eingepaßt und befestigt sind, daß Anschlüsse der Detektorspulen nach außen gerichtet sind.

5. Verschleißüberwachung für ein Spaltrohr-Motorlager, bei der Detektorspulen an Eisenkern-Zahnabschnitten (1a) eines Stators angeordnet sind, um Verschleiß eines Lagers zu erfassen,
**dadurch gekennzeichnet, daß**
eine Detektorschaltung vorgesehen ist, gebildet durch Anbringen von zwei Paaren von Detektorspulen (C2, C4 und C6, C8), wobei die Spulen derart angeordnet sind, daß die Detektorspulen jedes Paares (C2, C4 und C6, C8) einander in einem Intervall von 180° gegenüberstehen und ein Paar Detektorspulen sich an jedem Ende der Eisenkern-Zahnabschnitte (1a) befindet, derart, daß die Spulen jedes Paares einander in Längsrichtung der Eisenkern-Zahnabschnitte (1a) zugewandt sind und Differenz-Ausgangssignal-Anschlußschaltungen der paarweisen Detektorspulen, die einander an jedem Ende gegenüberliegen, in Reihe geschaltet sind.

6. Verschleißüberwachung nach Anspruch 5, bei der die Detektorschaltung ein Voltmeter (11) enthält.

7. Verschleißüberwachung nach Anspruch 6, bei der das Voltmeter (11) an die Differenz-Ausgangssignal-Anschlußschaltungen über ein Tiefpaßfilter (12) und einen Verstärker (10) angeschlossen ist.

8. Verschleißüberwachung nach einem der Ansprüche 5 bis 7, bei der gekerbte Nuten (1b) an jedem Teil jedes Endes der Eisenkern-Zahnabschnitte (1a) in seiner Längsrichtung ausgebildet sind und die beiden Paare von Detektorspulen (C2, C4 und C6, C8) zwischen die gekerbten Nuten (1b) und die Stirnflächen der Eisenkern-Zahnabschnitte (1a) dadurch eingepaßt und befestigt sind, daß Anschlüsse der Detektorspulen nach außen geführt sind.

9. Verschleißüberwachung für als Becherkonstruktion ausgeführtes Motorlager, bei der Detektorspulen an Eisenkern-Zahnabschnitten (1a) eines Stators angeordnet sind, um einen Lagerverschleiß festzustellen,
**dadurch gekennzeichnet, daß**
eine Detektorschaltung vorgesehen ist, gebildet durch Anbringen von vier Paaren von Detektorspulen (C1, C3; C5, C7; C2, C6 C4 C8), wobei die Spulen so angeordnet sind, daß die Detektorspulen jedes Paares von Spulen (C1, C3 und C5, C7; C2, C6 und C4, C8) einander in einem Intervall von 180° zugewandt sind und zwei Paare von Detektorspulen sich an jedem Ende der Eisenkern-Zahnabschnitte (1a) in der Weise befinden, daß die Spulen jedes Paares einander in Längsrichtung der Eisenkern-Zahnabschnitte zugewandt sind und die Differenz-Ausgangssignal-Anschlußschaltungen von ersten zwei Paaren von Detektorspulen (C1, C3 und C5, C7), die einander zugewandt sind, über zwei Gleichrichter (D1, D2) zu einer Parallelschaltung parallel geschaltet sind, während die Differenz-Ausgangssignal-Anschlußschaltungen von zweiten zwei Paaren von Detektorspulen (C2, C6 und C4, C8), die einander gegenüberstehen, über einen Gleichrichter (D3) zur Bildung einer Reihenschaltung in Serie geschaltet sind, und eine Detektorschaltung dadurch gebildet wird, daß die Parallelschaltung und die Reihenschaltung über einen Ausgangsanzeiger (11) verbunden sind.

10. Verschleißüberwachung nach Anspruch 9, bei der die gekerbten Nuten (1b) an einem Teil jedes Endes der Eisenkern-Zahnabschnitte (1a) in dessen Längsrichtung gebildet sind, wobei die vier Paare von Detektorspulen (C1 bis C8) jeweils zwischen die gekerbten Nuten (1b) und die Stirnflächen der Eisenkern-Zahnabschnitte (1a) dadurch eingepaßt und befestigt sind, daß die Anschlüsse der Detektorspulen nach außen geführt sind.

## Revendications

1. Dispositif de surveillance de l'abrasion d'un palier d'un moteur à manchon d'entrefer, dans lequel des bobines de détection sont disposées sur des parties de dents (1a) d'un noyau de fer d'un stator pour détecter l'abrasion d'un palier, **caractérisé en ce qu'**il est prévu un circuit de détection constitué par le montage de deux paires de bobines de détection (C1, C3 et C5, C7), les bobines étant disposées de façon que les bobines de détection de chaque paire (C1, C3 et C5, C7) soient en face l'une de l'autre à un intervalle de 180 degrés, et qu'une paire de bobines de détection soit située à chaque extrémité des parties de dents (1a) du noyau en fer, de telle sorte que les bobines de chaque paire soient en face l'une de l'autre dans la direction longitudinale des parties de dents (1a) du noyau en fer , des circuits de connexion de sortie différentielle des paires de bobines de détection se faisant face l'un à l'autre à chaque extrémité étant reliées en parallèle.

2. Dispositif de surveillance selon la revendication 1, dans lequel ledit circuit de détection comporte un voltmètre (11).

3. Dispositif de surveillance selon la revendication 2, dans lequel le voltmètre (11) est relié aux dits circuits de connexion de sortie différentielle par des redresseurs (D1, D2) et par un amplificateur (10).

4. Dispositif de surveillance selon l'une quelconque des revendications 1 à 3, dans lequel des rainures entaillées (1b) sont formées sur une partie de chaque extrémité des parties de dents (1a) du noyau en fer dans leur direction longitudinale , et lesdites deux paires de bobines de détection (C1, C3 et C5, C7) sont respectivement ajustées et fixées entre les rainures entaillées (1b) et les faces terminales des parties de dents (1a) de noyau de fer, en tournant vers l'extérieur les attaches d'extrémités des bobines de détection.

5. Dispositif de surveillance de l'abrasion d'un palier d'un moteur à manchon d'entrefer , dans lequel des bobines de détection sont disposées sur des parties de dents (1a) d'un noyau en fer d'un stator pour détecter l'abrasion d'un palier, **caractérisé en ce qu'**il est prévu un circuit de détection constitué par le montage de deux paires de bobines de détection (C2, C4 et C6, C8), les bobines étant disposées de façon que les bobines de détection de chaque paire (C2, C4 et C6, C8) soient en face l'une de l'autre à un intervalle de 180 degrés, et qu'une paire de bobines de détection soit située à chaque extrémité des parties de dents (1a) du noyau en fer, d'une façon telle que les bobines de chaque paire soient en face l'une de l'autre dans la direction longitudinale des parties de dents (1a) du noyau en fer, des circuits de connexion de sortie différentielle des paires de bobines de détection se faisant face l'un avec l'autre à chaque extrémité étant reliés en série.

6. Dispositif de surveillance selon la revendication 5, dans lequel le circuit de détection inclut un voltmètre (11).

7. Dispositif de surveillance selon la revendication 6, dans lequel le voltmètre (11) est relié aux circuits de connexion de sortie différentielle à travers un filtre passe - bas (12) et un amplificateur (10).

8. Dispositif de surveillance selon l'une quelconque des revendications 5 à 7, dans lequel des rainures entaillées (1b) sont formées sur une partie de chaque extrémité des parties de dents (1a) du noyau en fer dans sa direction longitudinale, et les deux paires de bobines de détection (C2, C4 et C6, C8) sont respectivement ajustées et fixées entre les rainures entaillées (1b) et les faces terminales des parties de dents (1a) du noyau en fer, en tournant vers l'extérieur les attaches d'extrémités desdites bobines de détection .

9. Dispositif de surveillance de l'abrasion d'un palier de moteur à manchon d'entrefer , dans lequel des bobines de détection sont disposées sur des parties de dents (1a) d'un stator pour détecter l'abrasion d'un palier, **caractérisé en ce qu'**il est prévu un circuit de détection constitué par le montage de quatre paires de bobines de détection (C1, C3 ; C5, C7 ; C2, C6 ; C4, C8), les bobines étant disposées-de telle sorte que les bobines de détection de chaque paire de bobines (C1, C3 et C5, C7 ; C2, C6 et C4, C8) soient en face l'une de l'autre à un intervalle de 180 degrés, et que deux paires de bobines de détection soient situées à chaque extrémité des parties de dents (1a) du noyau en fer, d'une façon telle que les bobines de chaque paire soient en face l'une de l'autre dans la direction longitudinale des parties de dents du noyau de fer, que le circuit de connexion de sortie différentielle d'une première de deux paires de bobines de détection (C1, C3 et C5, C7) se faisant face soit relié en parallèle à travers deux redresseurs (D1, D2) pour former un circuit parallèle , que le circuit de connexion de sortie différentielle d'une seconde deux paires de bobines de détection (C2, C6 et C4, C8) se faisant face soit relié en série à travers un redresseur (D3) pour former un circuit série , et il est réalisé un circuit de détection en reliant ledit circuit parallèle et ledit circuit série par un indicateur de sortie (11)

10. Dispositif de surveillance selon la revendication 9, dans lequel des rainures entaillées (1b) sont formées sur une partie de chaque extrémité des parties de dents (1a) du noyau en fer dans sa direction longitudinale, et les quatre paires de bobines de détection (C1 à C8) sont respectivement ajustées et fixées entre les rainures entaillées (1b) et les faces terminales des parties de dents (1a) du noyau en fer, en tournant vers l'extérieur les attaches d'extrémités desdites bobines de détection.
